Europäisches Patentamt

European Patent Office

Office européen des brevets

(19)

(11) EP 1 020 280 A2

(12) EUROPEAN PATENT APPLICATION

(43) Date of publication:
19.07.2000 Bulletin 2000/29

(51) Int Cl.⁷: **B29C 47/88**

(21) Application number: 99125748.6

(22) Date of filing: 23.12.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 13.01.1999 JP 636499

(71) Applicant: TORAY INDUSTRIES, INC.
Tokyo 103-8666 (JP)

(72) Inventors:
• **Sakamoto, Jun**
Otsu-shi, Shiga 520-0842 (JP)

• **Tsunashima, Kenji**
Kyoto-shi, Kyoto 607-8075 (JP)
• **Miyakawa, Katsutoshi**
Kodaira-shi, Tokyo 187-0042 (JP)

(74) Representative: **Hager, Thomas J.**
Hoefer, Schmitz, Weber & Partner
Patentanwälte
Gabriel-Max-Strasse 29
D-81545 München (DE)

(54) **Method and apparatus for producing thermoplastic resin sheet**

(57)    A method and apparatus for producing a thermoplastic resin sheet (1), in which a melt-extruded running thermoplastic resin sheet is brought into contact with a rotating cooling body (31), to be cooled and solidified, for producing a cast sheet (2), comprising the use of an electrifying body (21) rotating in contact with the sheet (1), with the sheet kept running between the cooling body (31) and the electrifying body (21). The charges given from the electrifying body (21) rotating in contact with the sheet (1) to the sheet (1) keep the sheet (1) in contact with the surface of the cooling body.

FIG. 1

**Description**

BACKGROUND OF THE INVENTION

FIELD OF THE INVENTION

The present invention relates to a method and apparatus for producing a thermoplastic resin sheet. In more detail, the present invention relates to a method and apparatus for producing a thermoplastic resin sheet excellent in productivity and quality by continuous high speed casting.

DESCRIPTION OF THE PRIOR ART

It is known that a cast sheet or cast film can be produced by continuously extruding a molten thermoplastic resin from a die as a sheet, and bringing the extruded running sheet into contact with a rotating cooling body (usually a cooling drum, cooling roll or cooling belt) kept at a temperature lower than the glass transition temperature (Tg) of the resin, for cooling and solidifying it. A technique of applying static electricity to the sheet before bringing the sheet into contact with the cooling drum, for bringing the sheet in contact with the surface of the cooling drum in the above process is also known. The process for producing a thermoplastic resin sheet using such electrostatic application method is described in US Patent No. 3,223,757.

Thus, an amorphous cast sheet having a smooth surface can be produced. This cast sheet is then, as required, stretched in the machine direction (monoaxial stretching) or stretched in both the machine direction and the transverse direction (biaxial stretching).

This conventional electrostatic application method is effected by applying a high voltage to an electrode spaced from the surface of the molten sheet. In this method, air is at first ionized, and the generated ions are injected into the sheet by the electric field formed by the electrode. Therefore, the voltage must be applied under a condition not to cause dielectric breakdown of air, and so the voltage applied to the molten sheet cannot be raised.

Since the electrified quantity of the sheet has relation with the voltage applied to the sheet, it is difficult to sufficiently raise the contact force between the sheet and the cooling body by the conventional electrostatic application method. Especially when the casting speed is higher, it is difficult to obtain the corresponding contact force. As a result, since it cannot be substantially perfectly prevented that air is caught between the sheet and the cooling body, the casting speed cannot be raised to 60 m/min or higher, and the productivity of the cast sheet remains poor disadvantageously.

SUMMARY OF THE INVENTION

The object of the present invention is to overcome the above mentioned disadvantage of the prior art, by providing a method and apparatus for producing a thermoplastic resin sheet excellent in both productivity and quality.

The method for producing a thermoplastic resin sheet of the present invention to achieve this object comprises (a) a sheet extrusion step of continuously extruding a molten thermoplastic resin as a sheet from a sheet forming die, (b) a sheet electrification step of electrifying the sheet by holding the sheet formed by the extrusion step between a rotating electrifying body and a rotating cooling body, (c) a sheet cooling step of cooling and solidifying the sheet electrified by the electrification step and kept in contact with the surface of the cooling body, by the cooling body, and (d) a cast sheet take-up step of taking up the cast sheet formed by the cooling step.

The apparatus for producing a thermoplastic resin sheet of the present invention to achieve the above object comprises (a) a sheet forming die adapted for continuously extruding a molten thermoplastic resin, (b) a rotating electrifying body provided to be kept in contact with the surface of the sheet extruded from the sheet forming die, (c) a rotating cooling body provided to be kept in contact with the sheet on the surface opposite to the surface kept in contact with the electrifying body, (d) a means for keeping the sheet positioned between the electrifying body and the cooling body, and (e) a cast sheet take-up means for taking up the cast sheet formed by the cooling body.

In the method and apparatus for producing a thermoplastic resin sheet of the present invention, since the rotating electrifying body is kept in direct contact with the sheet, air is substantially not caught between them, and since electric charges are directly injected from the electrifying body into the sheet, a high voltage can be applied to the sheet, to generate a powerful electrostatic attraction, i.e., a powerful contact force between the cooling body having opposite charges induced and the sheet. Since the sheet and the cooling body are powerfully kept in contact with each other, the effect of eliminating the air likely to exist between them is enhanced, to allow high speed casting.

The method and apparatus for producing a thermoplastic resin sheet of the present invention allows a cast sheet to be produced at a speed of 80 m/min to 300 m/min. Furthermore, when the cast sheet is stretched, a stretched sheet can be produced at a speed of 400 m/min or more, though depending on the selected stretching ratio. These possibilities greatly lower the production cost of a cast sheet or film.

Since the present invention allows electric charges to be directly applied to the sheet, it can be effectively used also for forming a sheet of a resin having a high electric resistance when molten that is melt volume resistivity. For example, it is effective for producing a polyester sheet to be used for electric capacitors or for supercooled extrusion casting. When a sheet to be used for electric capacitors is formed, a sheet with a high volume resistivity is used to improve the insulation performance, but it has been difficult to cast the sheet at a high speed by the conventional electrostatic application method.

The thermoplastic resin used in the process or apparatus for producing a thermoplastic resin sheet of the present invention means a resin which becomes flowable when heated. The resin can be selected, for example, from polyesters, polyamides, polyolefins, polyphenylene sulfide, vinyl polymers, and mixtures and modifications thereof, etc. Among them, a polyester resin or a polyamide resin can be preferably used as a sheet forming material.

The polyester means a high molecular compound with ester bonds in the main chain of the molecule. Such high molecular compounds include, for example, polyethylene terephthalate, polybutylene terephthalate, polyethylene naphthalate and copolymers thereof. Among them, polyethylene terephthalate, polyethylene naphthalate and copolymers thereof can be preferably used as sheet forming materials. Polyethylene terephthalate and copolymers thereof can be especially preferably used.

It is preferable that the recurring unit of any of these polyesters is 80 or more. More preferable is 120 or more. It is preferable that the inherent viscosity of the resin measured in orthochlorophenol (OCP) is 0.4 (0.1 l/g) or more. More preferable is 0.55 (0.1 l/g) or more.

The polyester resin used for forming the sheet can also contain various additives such as a slip agent, stabilizer, antioxidant, viscosity regulator, antistatic agent, colorant, pigment and a resin like a liquid crystal polyester.

The polyamide resin means a high molecular compound with amide bonds in the main chain. Such high molecular compounds include, for example, nylon 6, nylon 66, nylon 6-10, nylon 12, nylon 11, nylon 7, polymeta/paraxylylene adipamide, polyhexamethylene terephthalamide/isophthalamide, and copolymers and mixtures thereof.

As the polyphenylene sulfide resin, a straight chain resin substantially not containing any branched structure is desirable.

BRIEF DESCRIPTION OF THE DRAWINGS

Fig. 1 is a schematic side view showing an apparatus for executing the process for producing a thermoplastic resin sheet of the present invention.

Fig. 2 is a detailed plan view showing the portion of the cooling drum and the electrifying roll of the apparatus shown in Fig. 1.

DESCRIPTION OF THE PREFERRED EMBODIMENTS

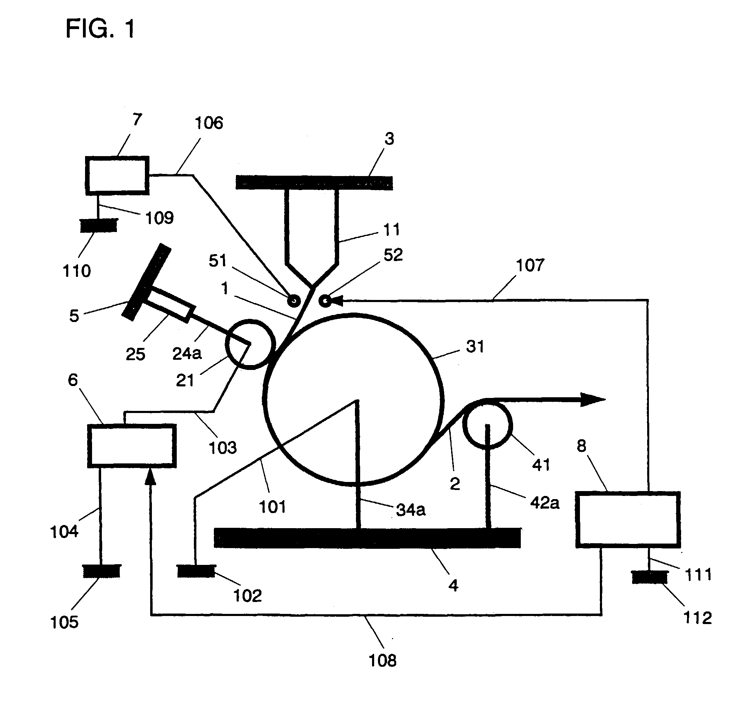

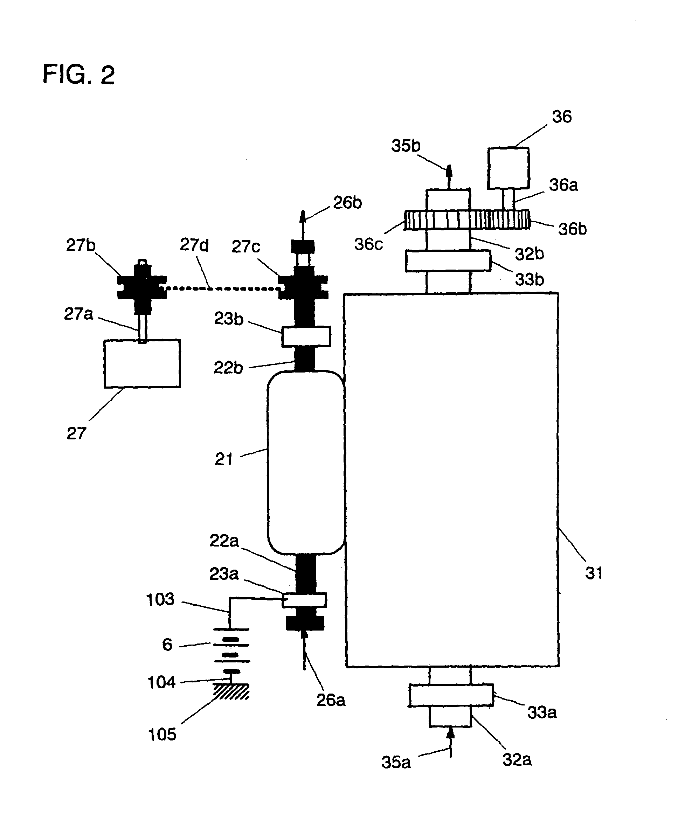

In Figs. 1 and 2, the apparatus for effecting the process for producing a thermoplastic resin sheet of the present invention is composed of a sheet forming die 11 for continuously extruding a molten thermoplastic resin as a sheet, an electrifying roll 21 as a rotating electrifying body, a cooling drum 31 as a rotating cooling body, and a sheet take-up device (not illustrated) containing a guide roller 41 for separating and guiding the cast sheet from the cooling drum 31. The guide roller 41 is rotatably supported by supports 42a and 42b (not illustrated), and the supports 42a and 42b are fixed on a machine base 4.

The sheet 1 extruded from the sheet forming die 11 is held between the electrifying roll 21 and the cooling drum 31, and given charges from the electrifying roll 21, to be kept in contact with the surface of the cooling drum 31. With the rotation of the cooling drum 31, it is cooled and solidified into a cast sheet 2. The cast sheet 2 is separated from the surface of the cooling drum 31 and fed over the guide roller 41 toward the sheet take-up device (not illustrated).

As the sheet forming die 11, a publicly known die can be used. It is not described in detail here. The sheet forming die 11 is fixed on a machine base 3. It is preferable that a draft ratio (the die lip clearance of the sheet forming die 11/the thickness of the extruded sheet 1) of the formed sheet 1 of the molten resin extruded from the sheet forming die 11 is 3 or more, since a sheet 1 or cast sheet 2 small in thickness irregularity and good in flatness is likely to be obtained. A more preferable range is 7 to 20.

Also as the cooling drum 31, a publicly known drum can be used. The cooling drum 31 is used to cool the sheet 1, for obtaining an amorphous cast sheet 2. At both the ends of the cooling drum 31, hollow rotary shafts 32a and 32b are attached. The rotary shafts 32a and 32b are rotatably supported by bearings 33a and 33b. The bearings 33a and 33b are fixed on the machine base 4 through supports 34a and 34b (not illustrated).

At the end of the rotary shaft 32a, a coolant supply pipe for supplying a coolant into the cooling drum 31 is connected. This state is schematically indicated by an arrow 35a. At the end of the rotary shaft 32b, a coolant discharge pipe for discharging the coolant used for cooling the cooling drum 31 is connected. This state is schematically indicated by an arrow 35b. The coolant is cyclically used through a temperature controller provided on the way.

As the rotating means for rotating the cooling drum 31, a motor 36, a rotary shaft 36a of the motor 36, a gear 36b attached to the rotary shaft 36a, and a gear 36c engaged with the gear 36b and attached to the rotary shaft 32b are provided.

The cooling drum 31 is electrically grounded at a grounding point 102 through a cable 101.

As the coolant of the cooling drum 31, usually low temperature water is used. It is preferable that the cooling drum 31 is formed by a metal at least on the peripheral surface. It is preferable that the metal surface is plated with hard chromium, and has a surface roughness of 0.5 μm or less.

The electrifying roll 21 has hollow rotary shafts 22a and 22b at both the ends. The rotary shafts 22a and 22b are rotatably supported by bearings 23a and 23b. The bearings 23a and 23b are supported by air cylinders 25 through support arms 24a and 24b (not illustrated), and the air cylinders 25 are fixed on a machine base 5. The air cylinders 25 are used to adjust the contact pressure of the electrifying roll 21 on the sheet 1.

At the end of the rotary shaft 22a, a coolant supply pipe for supplying a coolant into the electrifying roll 21 is connected. This state is schematically indicated by an arrow 26a. At the end of the rotary shaft 22b, a coolant discharge pipe for discharging the coolant used for cooling the electrifying roll 21 is connected. This state is schematically indicated by an arrow 26b. The coolant is cyclically used through a temperature controller provided on the way.

As the rotating means for rotating the electrifying roll 21, a motor 27 attached on a machine base 5, a rotary shaft 27a of the motor 27, a pulley 27b attached to the rotary shaft 27a, a pulley 27c attached to the rotary shaft 22b, and a rotation transmitting belt 27d for making the pulley 27b and the pulley 27c engaged with each other are provided.

The electrifying roll 21 is connected to a power supply 6 for applying charges to the electrifying roll 21, through a cable 103. The power supply 6 is electrically grounded at a grounding point 105 through a cable 104.

The electrifying roll 21 is electrified by directly applying a DC voltage to the roll from the power supply 6. The DC voltage applied to the electrifying roll 21 can be either positive or negative, and it is preferable that the voltage is 100 V to 10 kV. To limit the current flowing in the sheet 1, an electric resistance can be inserted between the grounding point 102 and the cooling drum 31 as required.

The electrifying roll 21 can be insulated by using ceramic bearings as the bearings 23a and 23b, or covering the rotary shafts 22a and 22b with a ceramic sleeve respectively, or inserting an insulating material into the pedestals of the bearings 23a and 23b. It the coolant is circulated, it is desirable to use insulating pipes made of a nylon resin, etc. as the coolant supply pipe 26a and the coolant discharge pipe 26b.

A potential difference exists between the electrifying roll 21 and the cooling drum 31. To prevent the discharge based on the potential difference, it is preferable that the width of the conductive portion on the peripheral surface of the electrifying roll 21 is more narrow than the width of the sheet by 5 mm or more respectively at both the edges (10 mm or more in total).

Depending on the post-processing (for example, stretching) of the cast sheet 2, it may be preferable that the sheet 2 is formed to be thicker at both the edge portions than at the central portion. This can be achieved by keeping the overall width of the electrifying roll 21 more narrow than the width of the sheet 1. However in this case, a phenomenon that both the edge portions of the sheet 1 are not likely to contact the cooling drum 31 occurs. To prevent this phenomenon, it is desirable to apply static electricity to only both the edge portions of the sheet 1. As the means for applying static electricity, the needle electrodes disclosed in Fig. 4 of said US Patent No. 3,223,757 can be used. As other methods, compressed air can be sprayed to the edge portions as practiced hitherto, or only the peripheral face portions of the cooling drum 31 corresponding to both the edge portions of the sheet 1 can be coated with a liquid not damaging the sheet 1, for example, water.

The electrifying roll 21 must be conductive entirely or partially on the peripheral surface. It is simplest to use a metal roll as the electrifying roll 21, but a rubber roll, ceramic roll or teflon roll processed to be conductive entirely or partially on the peripheral surface can also be used.

It is preferable that the electrifying roll 21 is smooth on the surface since it directly contacts the sheet 1, and that the surface roughness is 1 im or less. More preferable is 0.5 im or less.

If the surface of the electrifying roll 21 is formed by a metal only, it is preferable that the surface of the electrifying roll 21 is cooled for preventing the sticking to the sheet 1. It is preferable that the surface temperature of the electrifying roll 21 is lower than the glass transition point Tg of the thermoplastic resin. If the peripheral surface of the electrifying roll 21 is not insulated from its inside, it is necessary to use an insulating coolant for cooling. The insulating coolants which can be used here include insulating oils such as silicone oils, cooled air and substitutes for CFCs.

If the peripheral surface of the electrifying roll 21 is partially formed by a non-metallic portion, the electrifying roll 21 is not required to be cooled or can be cooled less intensively. If the peripheral surface of the electrifying roll 21 is partially formed by a non-metallic portion, the metallic portion existing in the peripheral surface of the electrifying roll 21 functions to give electric charges to the sheet, and is structurally designed to conduct within the portion. In this case, if the metallic portion is structurally designed to conduct to the rotary shaft 22a of the electrifying roll 21, the peripheral surface of the electrifying roll 21 can be electrified by supplying electricity to the rotary shaft 22a.

It is preferable that the material forming the metallic portion in the peripheral surface of the electrifying roll 21 is carbon steel or stainless steel, or any of the steels plated on the surface with nickel or chromium.

The non-metallic portion functions to prevent the sticking of the electrifying roll 21 onto the sheet 1, and it is preferable that the material of the non-metallic portion is a fluorine resin and/or a silicone resin. The fluorine resins which can be used here include tetrafluoroethylene resin, tetrafluoroethylene-perfluoroalkoxy resin, tetrafluoroethylene-hexafluoropropylene resin, ethylene-tetrafluoroethylene resin and ethylene-chlorotrifluoroethylene resin. In view of heat resistance and non-sticking, tetrafluoroethylene resin and tetrafluoroethylene-perfluoroalkoxy resin are especially preferable.

The electrifying roll 21 partially having a non-metallic portion on the surface can be produced, for example, by forming a spiral groove in the surface of a metallic roll and filling the groove with a fluorine resin, or plating the surface of a metallic roll with a plating solution containing fluorine resin particles dispersed, to let the plating layer contain the fluorine resin particles, or sandblasting the surface of a metallic roll, filling the depressions formed in the surface with a fluorine resin, and polishing the surface, or filling the cracks of hard chromium plating, etc. with fluorine resin particles.

If the processing conditions in these methods are properly changed, the ratio of the metallic portion/non-metallic portion on the surface of the roll can be properly set. It is preferable that the area of the non-metallic portion accounts for 20 to 80% of the peripheral surface of the electrifying roll 21. If the area is less than 20%, the sheet 1 is likely to stick to the electrifying roll 21, and if more than 80%, the electric charges given to the sheet 1 decrease to lower the casting speed.

Also in the case of a composite roll having a metallic portion and a non-metallic portion on the surface, it is preferable that the surface roughness of the roll is 1 μm or less. Especially preferable is 0.5 μm or less.

The surface speed of the electrifying roll 21 must substantially agree with the surface speed of the sheet 1. This can be achieved by using a drive mechanism to let the rotating speed of the electrifying roll 21 follow the rotating speed of the cooling drum 31, or using a free rotating roll as the electrifying roll 21.

However, since the sheet 1 in contact with the electrifying roll 21 is in the process of shifting in phase from a molten state to a solid state, it is difficult to let the surface speed of the sheet 1 agree with the surface speed of the electrifying roll 21. Unless the traveling speed of the sheet 1 substantially agrees with the rotating speed of the electrifying roll 21, the sheet 1 is deformed or scratched on the surface. As a result, it is difficult to obtain a cast film with good quality.

So, it is preferable that the electrifying roll 21 is a free rotating roll. If the electrifying roll 21 is a free rotating roll, the surface speed of the sheet 1 substantially can agree with the surface speed of the electrifying roll 21, and a cast film with good quality can be obtained.

If the electrifying roll 21 is a free rotating roll, the equipment can be simple, and safety, operation convenience and maintenance convenience improve advantageously.

On the other hand, if the electrifying roll 21 rotates irregularly, the irregular rotation causes the sheet 1 to be irregular in thickness disadvantageously. This problem can be solved by any idea to ensure that the electrifying roll 21 can be rotated as uniformly as possible.

One of such ideas is to improve the separability of the sheet 1 from the electrifying roll 21. To allow it, electric charges of the same polarity as that of the electrifying roll 21 are applied to the sheet 1 beforehand till the sheet 1 contacts the electrifying roll 21, to ensure that the sheet 1 can be easily separated from the electrifying roll 21 based on the electrostatic repulsion. Furthermore, if the sheet 1 is electrified to have charges with the same polarity as that of the electrifying roll 21 beforehand, the discharge between the sheet 1 and the electrifying roll 21 is inhibited, to keep the sheet 1 good in surface property. Auxiliary electrodes provided for this purpose are described later.

It is also desirable that the electrifying roll 21 has partially the above described non-metallic portion on the surface, to be excellent in conductivity and separability.

The separability of the sheet 1 from the electrifying roll 21 is affected by the surface temperature of the electrifying roll 21. To keep the electrifying roll 21 less likely to rise in surface temperature, it is preferable that the peripheral diameter of the electrifying roll 21 is in a range of 150 mm to 350 mm.

If the electrifying roll 21 is a free rotating roll, it is preferable that the rotating torque is 3 N (Newton) or less at the roll radius. Especially preferable is 1 N or less. If the rotating torque is more than 3 N, thickness irregularity is likely to occur due to the friction between the surface of the electrifying roll 21 and the surface of the sheet 1. Also when the electrifying roll 21 is a free rotating roll, it is preferable that the surface roughness is 1 μm or less. Especially preferable is 0.5 μm or less.

The electrifying roll 21 must have a conductive material on the surface, but a structure in which the conductive material on the surface of the electrifying roll 21 is insulated from the shafts supporting the rotation of the electrifying roll 21 can also be adopted. In this case, it is not necessary that the coolant flowing in the electrifying roll 21 is an insulating coolant. If so, the coolant used in the cooling drum 31 can diverge to be guided into the electrifying roll 21, for allowing the equipment to be simplified. Even if discharge occurs between the electrifying roll 21 and the cooling drum 31, only the conductive layer on the surface of the electrifying roll 21 is damaged, and the surface of the electrifying roll 21 is not roughened greatly without adversely affecting the surface of the sheet 1. Since the damage of the electrifying roll 21 is localized in the surface layer only, the regeneration of the electrifying roll 21 is easy.

The electrifying roll 21 for this purpose has a structure consisting of the conductive material in the surface layer, the insulating layer as an intermediate layer and rotary support shafts. Since the rotary support shafts are insulated from the surface layer, electricity is applied only to the surface layer. Thus, it does not happen that electricity flows in the rotary support shafts, and it is not required to insulate the rotary support shafts internally, and the electrifying roll 21 can have a usually used cooling structure.

The material of the insulating layer formed in the electrifying roll 21 is selected in reference to electric insulation, heat resistance, etc. The materials which can be preferably used here include ceramics, silicone resins and teflon resin. Among them, ceramics are especially preferable. The ceramics which can be preferably used here include alumina, zirconia, titania, tungsten carbide and mixtures thereof. The fluorine resins which can be preferably used here include tetrafluoroethylene resin, tetrafluoroethylene-perfluoroalkoxy resin, tetrafluoroethylene-hexafluoropropylene resin, ethylene-tetrafluoroethylene resin and ethylene-chlorotrifluoroethylene resin.

It is preferable that the conductive layer formed in the surface of the electrifying roll 21 is a metal, and a metallic layer formed by electroless plating, vapor deposition or thermal spray is especially preferable.

It is preferable that the rotary support shafts of the electrifying roll 21 are formed by stainless steel or carbon steel if it is thermally sprayed with a ceramic on the surface. It is preferable that the structure allows the passage of cooling water, for example, like a double tube structure. The double tube in this case refers to a structure of a rotary support shaft consisting of an outer cylinder and an inner cylinder, to allow cooling water to flow in the clearance formed between the outer cylinder and the inner cylinder.

If the sheet 1 has a hole or thinned portion, discharge is likely to occur between the electrifying roll 21 and the cooling drum 31. The sheet 1 is likely to have a hole or thinned portion formed in the following case.

When a thermoplastic resin is melt-extruded from an extruder (not illustrated), it can happen that the air contained in the supplied raw resin or the bubbles evolved by the water contained in the raw material are delivered as bubbles from the sheet forming die 11. This phenomenon is likely to occur when the conditions of the extruder are changed for changing the thickness of the sheet 1 or the sheet forming speed.

If bubbles are evolved, it can happen that the sheet 1 has a hole or partially very thin portion as a defect of the sheet 1. At the defective portion, discharge can occur from the electrifying roll 21 to the cooling drum 31. If the discharge occurs, an excessive current caused by discharge flows, to partially melt the surfaces of the electrifying roll 21 and the cooling drum 31, and projections and depressions are formed as damage in these surfaces.

Especially when the electrifying roll 21 and the cooling drum 31 are mirror-finished on the surface, for forming a sheet with a smoother surface, the damage caused by the discharge is fatal. The damaged roll and the drum must be repaired by partial polishing or must be exchanged, to lower productivity.

To prevent the roll and the drum from being damaged, it is preferable to detect any defect caused in the sheet 1 before the defect goes into the clearance between the electrifying roll 21 and the cooling drum 31, for adjusting the voltage applied to the electrifying roll 21, thereby preventing the occurrence of discharge.

To prevent the occurrence of discharge, an electrode 51 is provided between the sheet forming die 11 and the electrifying roll 21, and an earth electrode 52 is provided to face the electrode 51 with the sheet 1 positioned between the two electrodes. The electrode 51 is called auxiliary electrode. The electrode 51 is connected to a power supply 7 through a cable 106. The earth electrode 52 is connected to a controller 8 through a cable 107. The controller 8 is connected to the power supply 6 through a cable 108. The power supply 7 is electrically grounded at a grounding point 110 through a cable 109. The controller 8 is electrically grounded at a grounding point 112 through a cable 111.

If the sheet 1 has a defect, the ions by the corona discharge generated by the electrode 51 go through the defect to reach the earth electrode 52. As a result, the current flowing in the earth electrode 52 increases. The increased current is detected by the controller 8, to detect that the sheet 1 arriving from the sheet forming die 11 has a defect. Based on the detection and immediately after the detection, the controller 8 issues a signal to cut off or decrease the voltage of the power supply 6 which gives charges to the electrifying roll 21. Thus, the voltage applied to the electrifying roll 21 is controlled to inhibit the discharge between the electrifying roll 21 and the cooling drum 31.

The auxiliary electrodes provided as the electrode 51 and the earth electrode 52 are also used as the auxiliary electrodes for allowing easier separation of the sheet 1 from the electrifying roll 21 described above. The electrodes 51 and 52 can be formed as either wires or tapes.

It is preferable that the electrifying roll 21 and the cooling drum 31 are positioned in relation with the sheet forming die 11 in such a manner that the sheet 1 is vertically extruded in the vertical direction (gravity direction) from the sheet forming die 11 toward the clearance between the electrifying roll 21 and the cooling drum 31, to reach the clearance between the electrifying roll 21 and the cooling drum 31 in the vertical direction. Thus, the vibration of the sheet 1 is inhibited, to allow stable casting easily.

The obtained cast sheet 2 is stretched and/or heat-treated as required according to a publicly known method, into a final product.

EXAMPLES

The present invention is described below in more detail in reference to examples and comparative examples.

Methods for measuring physical values:
Inherent viscosity of polyester resin [η]:

The inherent viscosity was obtained from the following formula based on measurement at 25°C with o-chlorophenol as a solvent:

$$[\eta] = 1 \, n \, [\eta \, sp/c]$$

where the specific viscosity η sp is obtained by subtracting 1 from relative viscosity η r, and c is the concentration. The inherent viscosity is expressed in 0.1 l/g.

Casting contact:

The sheet 1 on the cooling drum 31 was visually observed. A case where no casting defect was found is expressed by "○", and a case where a casting defect such as contained air or run-down was found is expressed by "×".

Cast surface property:

The cast sheet 2 was irradiated with light on 100 $m^2$ or more of the surface, and the light reflected from it was visually observed, to see whether the surface had projections and depressions such as craters. A case where no projection or depression was observed at all on the surface is expressed by " ○", and a case where projections and depressions of less than 0.1 μm were observed on the surface but could be erased by stretching was expressed by "Δ". A case where projections and depressions were observed on the entire surface is expressed by "×".

Separability from cooling drum:

The separability from the cooling drum 31 was evaluated. A case where the sheet could be naturally separated from the cooling drum 31 is expressed by "○, and a case where it could be separated at a peeling force of 1 N/cm or more is expressed by "Δ". A case where separation was difficult is expressed by "×". Separability from electrifying roll:
The separability from the electrifying roll 21 was evaluated. A case where the sheet could be naturally separated from the electrifying roll 21 is expressed by "○". and a case where it could be separated at a peeling force of 1 N/cm or more is expressed by "Δ". A case where separation was difficult is expressed by "×".

Surface condition of electrifying roll:

The surface condition of the electrifying roll 21 was observed after completion of operation. A case where a flaw formed by discharge and transferred to the film was observed on the surface of the electrifying roll 21 is expressed by "×". A case where any flaw transferred to the film was not observed though the conductive layer only was damaged is expressed by "○". Rotating torque of electrifying roll:
The force in N (Newton) at which the electrifying roll 21 could be started to rotate when a spring balance fixed on the surface of the electrifying roll 21 was pulled in the tangential direction of the roll.

Thermal properties of polyester:

Using DSC measuring instrument Model RDC220 produced by Seiko Denshi Kogyo, a polyester weighing 20 mg was heated at a rate of 20° C/min up to 300° C in nitrogen gas atmosphere, quenched from 300° C, and heated again at a rate of 20° C/min up to 300° C, while measuring the glass transition temperature Tg, cold crystallization temperature Tcc and melting point Tm. After the polyester was heated to 300° C, it was cooled at a rate of 20° C/min, to measure the crystallization heat peak temperature Tmc. Relative viscosity η r:
Measured according to JIS K 1860.

EXAMPLE 1

As the thermoplastic resin, polyethylene terephthalate (PET) (inherent viscosity [ η ] = 0.62, glass transition temperature Tg = 70°C, cold crystallization temperature Tcc = 120°C, melting point Tm = 265°C, crystallization heat peak temperature Tmc = 215° C) was used, and 0.1 wt% of synthetic calcium carbonate particles with an average particle size of 0.5 μm were added to it as an additive. The resin was dried to a water content of less than 20 ppm. The dried resin was supplied into a publicly known melt extruder with a cylinder inner diameter of 250 mm, and melt-extruded at 285°C. The extruded molten resin was filtered by a 10 μm cut fiber stainless steel filter. The filtered molten resin was fed to a T die provided as the sheet forming die 11, and extruded as a sheet from the T die in the vertical direction (gravity direction). The formed molten sheet 1 was held between a roll with a peripheral diameter of 200 mm and a width of 800 mm, plated with hard chromium on the surface and having a surface roughness of 0.1 μm provided as the electrifying roll 21 and a drum with a peripheral diameter of 1.5 m and a width of 1,000, plated with hard chromium on the surface and having a surface roughness of 0.1 μm provided as the cooling drum 31, while being cast. The surface speeds of the electrifying roll 21 and the cooling drum 31 were set at 120 m/min respectively.

A DC positive voltage of 3 kV was applied to the electrifying roll 21, and the cooling drum 31 was grounded.

Cooling water was fed through the cooling drum 31, to keep the surface temperature of the cooling drum 31 at 25°C. The electrifying roll 21 was an insulated roll and a temperature-controlled silicone oil was fed through the roll, to keep the surface temperature at 25°C.

A DC positive voltage of 8 kV was applied from needle electrodes (not illustrated) to the edges of the sheet 1, to bring the edges of the sheet 1 into contact with the surface of the cooling drum 31.

The sheet 1 could be cast in good contact and could be separated well from the cooling drum, and the surface property of the obtained cast sheet 2 was good. The obtained cast sheet 2 was an amorphous sheet free from any surface defect, with a thickness of 250 μm and a width of 850 mm, small in thickness irregularity and excellent in flatness.

The cast sheet 2 was stretched to 5 times at a stretching temperature of 98° C by a publicly known roll type longitudinal multistep stretcher, and cooled to lower than the glass transition temperature Tg. In succession, the obtained stretched sheet was introduced into a tenter and held at both the edges by tenter clips. The sheet was stretched to 4.3 times in the transverse direction (laterally) in hot air atmosphere heated at 100° C in the tenter, heat-set with the length fixed at 220°C, and heat-set with 3% relaxation in the transverse direction at 150° C. Thus, a 12 μm thick biaxially oriented polyester sheet could be produced at a high speed of about 600 m/min stably without being broken. The produced sheet was wound as a sheet package.

The obtained sheet (final product) was quite free from any surface defect and excellent in flatness. The results are shown in Table 1.

COMPARATIVE EXAMPLE 1

A sheet was produced as described for Example 1, except that the voltage applied to the electrifying roll 21 was 0. The casting contact and surface property were poor, and the sheet varied greatly in width, to cause frequent de-clipping during lateral stretching in the tenter. The obtained sheet (final product) had projections and depressions on the surface, being poor in quality. Furthermore, productivity was low. The results are shown in Table 1.

EXAMPLES 2 AND 3

Sheets were produced as described for Example 1, except that the voltage applied to the electrifying roll 21 was changed. In both the cases, the obtained sheets (final products) were excellent in quality, and the producttivity was also good. The results are shown in Table 1.

EXAMPLE 4

A sheet was produced as described for Example 1, except that a negative voltage of 3 kV was applied to the electrifying roll 21. The obtained sheet (final product) was excellent in quality, and the productivity was also good. The results are shown in Table 1.

EXAMPLES 5 AND 6

Sheets were produced as described for Examples 2 and 3 respectively, except that tungsten wires 51 and 52 with a diameter of 0.2 mm respectively were installed in the transverse direction at positions upstream of the electrifying roll 21 on both sides of the molten thermoplastic resin sheet, and that a positive voltage of 5 kV was applied to the wire 51. The results are shown in Table 1.

EXAMPLE 7

As the thermoplastic resin, nylon 6 resin (relative viscosity [ ηr] = 2.6, glass transition temperature Tg = 40° C) was used, and 0.1 wt% of colloidal silica particles with an average particle size of 0.3 μm were added to it as an additive. The resin was dried according to a conventional method. The dried resin was supplied into an extruder with a cylinder inner diameter of 250 mm, and melt-extruded at 280°C. The extruded molten resin was filtered by a 10 μm cut fiber stainless steel filter. The filtered molten resin was fed to a T die provided as the sheet forming die 11, and extruded as a sheet from the T die. The formed molten sheet 1 was held between a roll with a peripheral diameter of 200 mm and a width of 800 mm, plated with hard chromium on the surface and having a surface roughness of 0.1 μm provided as the electrifying roll 21 and a drum with a peripheral diameter of 1.5 m and a width of 1,000 mm, plated with hard chromium on the surface and having a surface roughness of 0.1 μm provided as the cooling drum 31, while being cast. The surface speeds of the electrifying roll 21 and the cooling drum 31 were set at 100 m/min respectively.
A DC positive voltage of 3 kV was applied to the electrifying roll 21, and the cooling drum 31 was grounded.
Cooling water was fed through the cooling drum 31, to keep the surface temperature of the cooling drum 31 at 5°C. The electrifying roll 21 was an insulated roll, and a temperature-controlled silicone oil was fed through the roll, to keep the surface temperature at 5° C.
A DC positive electrode of 8 kV was applied from needle electrodes (not illustrated) to the edges of the sheet 1, to keep the edges of the sheet 1 in contact with the surface of the cooling drum 31.
The sheet 1 could be cast in good contact and separated from the cooling drum well. The obtained cast sheet 2 was good in surface property. The obtained cast sheet 2 was an amorphous sheet free from any surface defect, with a thickness of 150 μm and a width of 850 mm, small in thickness irregularity and excellent in flatness.
The cast sheet 2 was stretched in the machine direction and the transverse direction to 3 times respectively at a stretching temperature of 55° C by a publicly known linear drive type simultaneous biaxial stretcher, and cooled to lower than the glass transition temperature Tg. In succession, the cooled sheet was heated to 210° C, heat-set with the length fixed, and heat-set with 3% relaxation in the machine direction and the transverse direction at 150° C. Then the sheet was cut at the edges, and a 15 μm thick biaxially oriented nylon sheet could be wound at a speed of 300 m/min without being broken.
The obtained sheet (final product) was free from any surface defect and excellent in thickness uniformity. The results are shown in Table 1.

COMPARATIVE EXAMPLE 2

A sheet was produced as described for Example 7, except that the voltage applied to the electrifying roll 21 was 0. The results are shown in Table 1.

Table 1

| | Voltage applied to electrifying roll (kV) | Casting speed (m/min) | Casting conditions | | | Remark |
|---|---|---|---|---|---|---|
| | | | Contact | Surface property | Separability | |
| Example 1 | 3 | 120 | ○ | ○ | ○ | |
| Example 2 | 0.1 | 120 | ○ | Δ | ○ | |
| Example 3 | 10 | 120 | ○ | Δ | Δ | |
| Example 4 | -3 | 120 | ○ | ○ | ○ | |
| Example 5 | 0.1 | 120 | ○ | ○ | ○ | Wire electrodes were used for voltage application. |

Table 1   (continued)

| | Voltage applied to electrifying roll (kV) | Casting speed (m/min) | Casting conditions | | | Remark |
|---|---|---|---|---|---|---|
| | | | Contact | Surface property | Separability | |
| Example 6 | 10 | 120 | ○ | ○ | ○ | Wire electrodes were used for voltage application. |
| Example 7 | 3 | 100 | ○ | ○ | ○ | |
| Comparative Example 1 | 0 | 120 | × | × | ○ | |
| Comparative Example 2 | 0 | 100 | × | × | × | |

EXAMPLE 8

As the electrifying roll 21, a roll with a peripheral diameter of 150 mm and a width of 800 mm was used. The electrifying roll 21 was a carbon steel roll plated with hard chromium on the surface. A 240 µm wide and 200 µm deep groove was formed at a pitch of 400 µm in the surface, and was filled with tetrafluoroethylene resin, and the surface was polished. The area percentage of the tetrafluoroethylene resin portion in the surface of the roll was 60%, and the surface roughness of the roll was 0.3 µm.

As the thermoplastic resin, polyethylene terephthalate (PET) (inherent viscosity [ η ] = 0.65, glass transition temperature Tg = 70°C, cold crystallization temperature Tcc = 125°C, melting point Tm = 264°C, crystallization heat peak temperature Tmc = 212° C) was used, and 0.1 wt% of colloidal silica particles with an average particle size of 0.3 µm were added to it as an additive. The resin was dried to achieve a water content of less than 20 ppm. The dried resin was supplied into a publicly known melt extruder with a cylinder diameter of 250 mm, and melt-extruded at 285° C. The extruded molten resin was filtered by a 10 µm cut fiber stainless steel filter. The filtered molten resin was fed to a T die provided as the sheet forming die 11 and extruded as a sheet from the T die. The formed molten sheet 1 was held between the electrifying roll 21 and a drum with a peripheral diameter of 1.5 m and a width of 1,000 mm, plated with hard chromium on the surface and having a surface roughness of 0.1 S provided as the cooling drum 31, while being cast. The surface speeds of the electrifying roll 21 and the cooling drum 31 were 120 m/min respectively.

The width of the electrifying roll 21 was more narrow than the width of the cast sheet 1. A DC positive voltage of 8 kV was applied from needle electrodes (not illustrated) to the edges of the cast sheet, to bring the edges of the sheet 1 into contact with the surface of the cooling drum 31.

During casting, a DC positive voltage of 3 kV was applied to the bearing 23a of the electrifying roll 21, and the cooling drum 31 was grounded.

Between the T die 11 and the electrifying roll 21, tungsten wires 51 and 52 with a diameter of 0.2 mm respectively were installed in the transverse direction of the sheet 1, and a positive voltage of 8 kV was applied to the wire 51.

The bearings 23a and the shaft 22a of the electrifying roll 21 were designed to conduct to the metallic portion of the roll surface.

Cooling water was fed through the cooling drum 31, to keep the surface temperature of the cooling drum 31 at 25°C. The electrifying roll 21 was a driven roll (free roll) without having any drive mechanism for rotation, and did not have a cooling mechanism either. The rotating torque of the electrifying roll 21 was 1 N. During casting, the surface temperature of the electrifying roll 21 was about 110° C, but it was not observed that the molten sheet 1 stuck to the surface of the electrifying roll 21.

The sheet 1 was cast in good contact and could be separated well from the cooling drum. The obtained cast sheet 2 was good in surface property. The obtained cast sheet 2 was an amorphous sheet free from any surface detect, with a thickness of 250 µm and a width of 850 mm, small in thickness irregularity and excellent in flatness.

The cast sheet was stretched to 5 times at a stretching temperature of 98°C by a publicly known roll type longitudinal multistep stretcher, and cooled to lower than the glass transition temperature Tg. In succession, the obtained stretched sheet was introduced into a tenter and held at both the edges by tenter clips. The sheet was stretched to 4.3 times in the transverse direction (laterally) in hot air atmosphere heated at 100°C in the tenter, heat-set with the length fixed at 220°C, and heat-set with 3% relaxation in the transverse direction at 150° C. Thus, a 12 µm thick biaxially oriented polyester sheet could be produced at a high speed of about 600 m/min stably without being broken.

The obtained sheet (final product) was quite free from any surface detect and excellent in flatness. The results are shown in Table 2.

COMPARATIVE EXAMPLE 3

A sheet was produced as described for Example 8, except that the voltage applied to the electrifying roll 21 was 0. The molten sheet 1 was likely to stick to the electrifying roll 21, and the casting contact and the surface property were poor. The sheet greatly varied in width, to cause frequent de-clipping during lateral stretching in the tenter. The obtained sheet (final product) had projections and depressions on the surface, being poor in quality, and the productivity was low. The results are shown in Table 2.

EXAMPLES 9 AND 10

Sheets were produced as described for Example 8, except that the rate of the tetrafluoroethylene resin portion in the surface of the electrifying roll 21 was changed. In both the cases, the obtained sheets (final products) were excellent in quality, and the productivity was also good. The results are shown in Table 2.

COMPARATIVE EXAMPLE 4

A sheet was produced as described for Example 8, except that the entire peripheral surface of the electrifying roll 21 was formed by tetrafluoroethylene resin. A positive voltage of 3 kV was applied to the electrifying roll shaft. However, since the surface of the electrifying roll 21 was entirely insulated, the effect of the electrifying roll 21 was little observed. Though the material in the surface of the electrifying roll 21 was not sticky, the molten sheet 1 stuck to the surface of the electrifying roll 21. In the casting of the sheet, both the casting contact and the surface property were poor. The results are shown in Table 2.

Table 2

| | Voltage applied to electrifying roll (kV) | Electrifying roll | | Casting speed (m/min) | Cast conditions | | |
|---|---|---|---|---|---|---|---|
| | | Surface area of non-metallic portion (%) | Sheet separability | | Contact | Surface property | Separability |
| Example 8 | 3 | 60 | ○ | 120 | ○ | ○ | ○ |
| Example 9 | 3 | 20 | Δ | 120 | ○ | ○ | ○ |
| Example 10 | 3 | 80 | ○ | 120 | ○ | Δ | ○ |
| Example 11 | 1 | 80 | ○ | 120 | ○ | ○ | ○ |
| Example 12 | 3 | 20 | Δ | 120 | ○ | ○ | ○ |
| Comparative Example 3 | 0 | 60 | Δ | 120 | × | × | ○ |
| Comparative Example 4 | 3 | 100 | × | 120 | × | × | × |

EXAMPLE 13

As the electrifying roll 21, a roll with a peripheral diameter of 150 mm and a width of 800 mm was used. The electrifying roll 21 was a carbon steel roll thermally sprayed with alumina ceramic on the surface, and the peripheral surface was further metallized by aluminum.

As the thermoplastic resin, polyethylene terephthalate (PET) (inherent viscosity [ $\eta$ ] = 0.63) was used, and 0.1 wt% of colloidal silica particles with an average particle size of 0.5 $\mu$m were added to it as an additive. The resin was dried to achieve a water content of less than 20 ppm. The dried resin was supplied into a publicly known melt extruder with a cylinder diameter of 250 mm, and melt-extruded at 285°C. The extruded molten resin was filtered by a 10 $\mu$m cut fiber stainless steel filter. The filtered molten resin was fed to a T die provided as the sheet forming die 11, and extruded as a sheet from the T die. The formed molten sheet 1 was held between the electrifying roll 21 and a drum with a peripheral diameter of 1.5 m and a width of 1,000 mm, plated with hard chromium on the surface, and having a surface roughness of 0.1 $\mu$m provided as the cooling drum 31, while being cast. The surface speeds of the electrifying roll 21 and the cooling drum 31 were 100 m/min respectively.

The width of the electrifying roll 21 was more narrow than the width of the cast sheet 1. A DC positive voltage of 8 kV was applied from needle electrodes (not illustrated) to the edges of the cast sheet 1, to bring the edges of the sheet into contact with the surface of the cooling drum 31.

During casting, a voltage was applied to the electrifying roll 21 by a carbon brush in contact with its plated surface. A DC positive voltage of 3 kV was applied. The cooling drum 31 was grounded.

Between the T die and the electrifying roll 21, tungsten wires 51 and 52 with a diameter of 0.2 mm respectively were installed in the transverse direction of the sheet 1, and a positive voltage of 7 kV was applied to the wire 51.

Cooling water was fed from a common cooler through the cooling drum 31 and the electrifying roll 21 respectively, to keep the respective surface temperatures at 25° C.

The obtained cast sheet 2 was an amorphous sheet free from any surface defect, with a thickness of 200 $\mu$m and a width of 850 mm, small in thickness irregularity and excellent in flatness.

The cast sheet was stretched to 4.5 times at a stretching temperature of 98° C by a publicly known roll type longitudinal multistep stretcher, and cooled to lower than the glass transition temperature Tg. In succession, the obtained stretched sheet was introduced into a tenter and held at both the edges by tenter clips. The sheet was stretched to 4.5 times in the transverse direction (laterally) in hot air atmosphere heated at 100° C in the tenter, heat-set with the length fixed at 220° C, and heat-set with 3% relaxation in the transverse direction at 150° C. Thus, a 10 $\mu$m thick biaxially oriented polyester sheet could be produced at a speed of about 450 m/min stably without being broken.

In this way, the sheet (final product) was produced for 3 months. The obtained sheet was quite free from any surface defect and excellent in flatness. The electrifying roll 21 was partially damaged on the surface, but the surface as a whole was smooth. It did not happen that the damage was transferred to the sheet. The results are shown in Table 3.

EXAMPLE 14

As the electrifying roll 21, a roll with a peripheral diameter of 150 mm and a width of 800 m was used. The electrifying roll 21 was a carbon steel roll thermally sprayed with alumina ceramic on the surface, and the peripheral surface was plated with nickel electrolessly. A sheet was produced as described for Example 13, except that this electrifying roll 21 was used. The results are shown in Table 3.

Table 3

|  | Voltage applied to electrifying roll (kV) | Casting speed (m/min) | Surface property of electrifying roll | Surface property of sheet |
|---|---|---|---|---|
| Example 13 | 3 | 100 | ○ | ○ |
| Example 14 | 3 | 100 | ○ | ○ |

EXAMPLE 15

As the thermoplastic resin, polyethylene terephthalate (PET (inherent viscosity [ $\eta$ ] = 0.62, glass transition temperature Tg = 70° C, cold crystallization temperature Tcc = 128°C, melting point Tm = 265° C, crystallization heat peak temperature Tmc = 215° C) was used, and 0.1 wt% of synthetic calcium carbonate particles with an average particle size of 0.25 $\mu$m were added to it as an additive. The resin was dried to achieve a water content of less than 20 ppm. The dried resin was supplied into a publicly known tandem extruder with a cylinder inner diameter of 250 mm, and melt-extruded at 285° C. The extruded molten resin was cooled to 270° C, and filtered by a 10 $\mu$m cut fiber stainless steel filter. The filtered molten resin was fed to a T die with a width of 1,000 mm provided as the sheet forming die 11, and extruded in the vertical direction (gravity direction) as a sheet from the T die. The formed sheet 1 was held between a free rotating roll with a peripheral diameter of 200 mm and a width of 800 mm, plated with chromium on the surface, and having a surface roughness of 0.1 $\mu$m and a rotating torque of 1.3 N provided as the electrifying roll 21 and a drum with a peripheral diameter of 2,000 mm and a width of 1,000 mm, plated with chromium on the surface, and having a surface roughness of 0.1 μm provided as the cooling drum 31, while being cast. The surface speeds of the electrifying roll 21 and the cooling drum 31 were 120 m/min respectively.

The width of the molten sheet 1 immediately before it was brought into contact with the cooling drum 31 was 870 mm. The sheet 1 was brought into contact with the electrifying roll 21 in such a manner that the center of the electrifying roll 21 agreed with the center of the sheet 1. A DC positive voltage of 3 kV was applied to the electrifying roll 21. The current in this case was 20 to 100 mA. The cooling drum 31 was grounded.

Cooling water was fed through the cooling drum 31, to keep the surface temperature of the cooling drum 31 at 25°C. Cooled air was fed as a coolant through the electrifying roll 21.

The sheet was cast at a high speed in good contact, and the surface property of the obtained sheet 2 was good.

The obtained cast sheet 2 was an amorphous sheet free from any surface defect, with a thickness of 250 μm and a width of 870 mm, small in thickness irregularity and excellent in flatness.

The cast sheet was stretched to 5 times at a stretching temperature of 98°C by a publicly known roll type longitudinal multistep stretcher, and cooled to lower than the glass transition temperature Tg. In succession, the obtained stretched sheet was introduced into a tenter and held at both the edges by tenter clips. The sheet was stretched to 4.5 times in the transverse direction (laterally) in hot air atmosphere heated at 110° C, heat-set with the length fixed at 220° C, and heat-set with 3% relaxation in the transverse direction at 150° C. Thus, a 12 μm thick biaxially oriented polyester sheet could be produced at a high speed of about 600 m/min stably without being broken.

The obtained sheet (final product) was quite free from any surface defect and excellent in flatness.

COMPARATIVE EXAMPLE 5

A sheet was produced as described for Example 15, except that the voltage applied to the electrifying roll 21 was 0. The molten sheet 1 stuck to the electrifying roll 21, and the cast sheet 2 could not be produced.

EXAMPLE 16

A 12 μm thick biaxially oriented sheet was produced as described for Example 15, except that a free rotating roll with a free rotating torque of 4 N was used as the electrifying roll 21 used in Example 1.

Since the rotating torque of the electrifying roll 21 was large, it was observed that the electrifying roll 21 slipped partially on the surface of the molten sheet 1. However, though the obtained cast sheet 2 had some thickness irregularity in the machine direction, the surface in contact with the cooling drum 31 had no crater and could be used as a raw sheet for producing a final product.

EXAMPLE 17

The wire electrode 52 used in Example 6 was grounded, and an ammeter was installed to measure the current flowing in the earth, to monitor the variations of the current. The apparatus contained a circuit which stopped the application of a voltage to the electrifying roll 21 when the time differential value of the current exceeds +25 mA/sec.

In the sheet producing apparatus, bubbles were intentionally evolved in the sheet 1 when the sheet 1 was formed, but the current flowing in the earth electrode increased to stop the application of a voltage to the electrifying roll 21 at the places where the sheet 1 extruded from the T die had holes. Thus, the discharge on the cooling drum 31 was not observed.

COMPARATIVE EXAMPLE 6

A sheet was produced as described for Example 17, except that the earth electrode was not actuated.

When the sheet 1 having intentionally evolved bubbles reached the electrifying roll 21 and the cooling drum 31, powerful discharge was generated toward the cooling drum 31.

**Claims**

1. A method for producing a thermoplastic resin sheet which comprises (a) a sheet extrusion step of continuously extruding a molten thermoplastic resin as a sheet from a sheet forming die, (b) a sheet electrification step of electrifying the sheet by holding the sheet formed by the extrusion step between a rotating electrifying body and a rotating cooling body, (c) a sheet cooling step of cooling and solidifying the sheet electrified by the electrification step and kept in contact with the surface of the cooling body, by the cooling body, and (d) a cast sheet take-up step of taking up the cast sheet formed by the cooling step.

2. A method for producing a thermoplastic resin sheet according to claim 1, wherein an auxiliary charging step of giving charges with the same polarity as that of the charges existing on the surface of the electrifying body to the surface of the sheet formed by the sheet extrusion step by an auxiliary electrode without any contact is provided between the sheet extrusion step and the sheet electrification step.

3. A method for producing a thermoplastic resin sheet according to claim 1 or 2, wherein the electrifying body has a metallic portion and a non-metallic portion in the surface layer.

4. A method for producing a thermoplastic resin sheet according to any one of claims 1 through 3, wherein the electrifying body is a driven rotating body without any positive drive mechanism for rotation.

5. A method for producing a thermoplastic resin sheet according to any one of claims 1 through 4, wherein the maximum width of the portion having charges of the electrifying body in the transverse direction of the sheet is shorter than the width of the sheet by 10 mm or more.

6. A method for producing a thermoplastic resin sheet according to any one of claims 1 through 5, wherein the portion having charges of the electrifying body is insulated from the rotating means for supporting the rotation of the electrifying body.

7. A method for producing a thermoplastic resin sheet according to claim 2, wherein an earth electrode is provided to face the auxiliary electrode of the auxiliary charging step, with the sheet kept running between the auxiliary electrode and the earth electrode, and the current flowing in the earth electrode is detected to control the charges existing in the electrifying body in reference to the detected current.

8. A method for producing a thermoplastic resin sheet which comprises a step of stretching and/or heat-treating the cast sheet obtained by the process for producing a thermoplastic resin sheet stated in any one of claims 1 through 7.

9. An apparatus for producing a thermoplastic resin sheet which comprises (a) a sheet forming die adapted for continuously extruding a molten thermoplastic resin, (b) a rotating electrifying body provided to be kept in contact with the surface of the sheet extruded from the sheet forming die, (c) a rotating cooling body provided to be kept in contact with the sheet on the surface opposite to the surface kept in contact with the electrifying body, (d) a means for keeping the sheet positioned between the electrifying body and the cooling body, and (e) a cast sheet take-up means for taking up the cast sheet formed by the cooling body.

10. An apparatus for producing a thermoplastic resin sheet according to claim 9, wherein an auxiliary electrode for giving charges of the same polarity as that of the charges existing on the surface of the electrifying body to the surface of the sheet extruded from the sheet forming die, spaced from the surface of the sheet, is provided between the sheet forming die and the electrifying body.

11. An apparatus for producing a thermoplastic resin sheet according to claim 9 or 10, wherein the electrifying body has a metallic portion and a non-metallic portion in the surface layer.

12. An apparatus for producing a thermoplastic resin sheet according to any one of claims 9 through 11, wherein the electrifying body is a driven rotating body.

13. An apparatus for producing a thermoplastic resin sheet according to any one of claims 9 through 12, wherein the maximum width of the portion having charges of the electrifying body in the transverse direction of the sheet is shorter than the width of the sheet by 10 mm or more.

14. An apparatus for producing a thermoplastic resin sheet according to any one of claims 9 through 13, wherein the portion having charges of the electrifying body is insulated from the rotating means to support the rotation of the electrifying body.

15. An apparatus for producing a thermoplastic resin sheet according to claim 10, wherein an earth electrode is provided to face the auxiliary electrode, with the sheet kept running between the auxiliary electrode and the earth electrode, and a current detector for detecting the current flowing in the earth electrode is provided, while a controller for controlling the charges existing on the electrifying body in reference to the current detected by the current detector is provided.

FIG. 1

EP 1 020 280 A2

FIG. 2

17